# EUROPÄISCHE PATENTSCHRIFT

(11) **EP 1 374 027 B1**
(45) Veröffentlichungstag und Bekanntmachung des Hinweises auf die Patenterteilung: **06.06.2018**
(21) Anmeldenummer: 02716619.8
(22) Anmeldetag: 25.02.2002
(51) Int. Cl.: G06F 3/0486, G06F 3/0484, G06F 3/0481

(54) **POSITIONIEREN VON AUF EINER BENUTZEROBERFLÄCHE ANGEZEIGTEN BEREICHEN**
POSITIONING OF AREAS DISPLAYED ON A USER INTERFACE
POSITIONNEMENT DE SECTEURS AFFICHES SUR UNE INTERFACE UTILISATEUR

(30) Priorität: 07.03.2001 DE 10110943
(43) Veröffentlichungstag der Anmeldung: 02.01.2004
(73) Patentinhaber: Nokia Solutions and Networks GmbH & Co. KG, 81541 Munich (DE)
(72) Erfinder: JARCZYK, Alexander, 85356 Freising (DE); OTTO, Birgit, 81927 München (DE)
(74) Vertreter: Weidel, Gottfried
(86) Internationale Anmeldenummer: PCT/DE2002/000680
(87) Internationale Veröffentlichungsnummer: WO 2002/071198

(56) Entgegenhaltungen:
- EP-A1- 1 028 570
- EP-A1- 1 052 849
- EP-A2- 0 514 307
- WO-A-01/07996
- DE-C1- 19 723 102
- US-A- 5 515 486
- US-A- 5 767 854
- US-A- 6 023 275

## Beschreibung

Die Erfindung betrifft ein Verfahren zur Steuerung einer Datenverarbeitungsanlage über eine Benutzeroberfläche, eine Datenverarbeitungsanlage mit Anzeigemitteln zur Anzeige einer Benutzeroberfläche und ein Programmprodukt für eine Datenverarbeitungsanlage.

Auf Datenverarbeitungsanlagen in Form von kleinen Endgeräten wie zum Beispiel PDAs (Personal Digital Assistants) oder Navigationsgeräten hat man nur sehr kleine Anzeigemittel zur Verfügung. Für eine auf dem Endgerät laufende Applikation soll deshalb möglichst die gesamte Fläche des Anzeigemittels verwendet werden. In den meisten Fällen ist dadurch zwar ein Wechseln zwischen verschiedenen Applikationen durch Hardkeys oder Popup-Menüs möglich, die Interaktion zwischen den Applikationen oder Applikationsgruppen ist aber nur durch ein Ausschneiden gefolgt von einem Einfügen und nicht durch direkte Manipulation wie zum Beispiel das Ziehen mit anschließendem Fallenlassen (Drag and Drop) möglich.

WO 01/07996 A1 offenbart in eine Anzahl von Anwendungsfenstern einer fensterbasierten Anzeigeumgebung. Die fensterbasierte Anzeigeumgebung ist konfiguriert zum automatischen Kaskadieren der Fenster, die nicht ausgewählt sind von einem ausgewählten Fenster weg. In einer Ausführungsform wird ein Anwendungsfenster, wenn es durch einen Benutzer ausgewählt wurde, auf die rechte Seite der Anzeigefläche bewegt und in den Vordergrund der Anzeigefläche gebracht, um zu verhindern, dass es mit anderen Fenstern überlappt.

US 6,023,275 betrifft einen dreidimensionalen, virtuellen Arbeitsraum für ein fensterbasiertes Anzeigesystem. Zur Positionierung eines Fensters können drei primäre Steuerelemente verwendet werden: Nach hinten schieben, perspektivische Transformation nach rechts und perspektivische Transformation nach links.

US 5,767,854 betrifft eine Benutzerschnittstelle und Datenmanagementverfahren zum effizienten Anzeigen, Manipulation und Analyse von mehrfach zugeordneten Daten oder Daten, welche veränderbar sind zur multidimensionalen Anzeige, Manipulation und Management. Hierfür werden Datenkarussells verwendet, welche eine oder mehrere N-ecke aufweisen.

DE 19723102 C1 betrifft ein Verfahren zum Darstellen von und Navigieren in umfangreichen, Graphikelemente enthaltenden Dateien. Dabei wird ein Aufteilen der Darstellungsflächen des Monitors und damit der zu handhabenden Dateien in ein vorzugsweise kartesisches Raster vorgenommen. Beim Aktivieren eines der Rasterfelder wird der dieses Feld repräsentierende Dateiinhalt zum Zentrums-Rasterfeld verlagert oder verschoben und es wird ein bisher auf dem Monitor nicht dargestellter am Randrasterfeld angrenzender Dateiinhalt aus der Hauptdatei nachgeladen, wobei diese nachgeladene Datei dann selbst zu einem neuen Rasterfeld wird. Gleichzeitig bzw. sukzessive werden die am bisherigen Zentrums-Rasterfeld angrenzenden übrigen, nicht aktivierten Randrasterfelder entgegen der gewählten Navigationsrichtung bewegt oder gegebenenfalls aus der Monitordarstellung herausgeführt.

US 5,515,486 betrifft ein Verfahren und eine Vorrichtung zum Anzeigen von Objekten, wobei ein vielflächiger Anzeigecontainer bereitgestellt wird, welcher einem Benutzer erlaubt, unabhängig Spalten und Zeilen von Frontfeldern um mehrere Achsen zu rotieren.

EP 1 052 849 A1 betrifft eine Informationen liefernde Vorrichtung, welche ausgebildet ist zum Wechseln der Anzeige durch Übergangsbilder, basierend auf Einzoom- und Auszoom-Bildern eines Menübildes und/oder durch Scrollen des Menübildes um ein Icon fokussiert bei einer vorbestimmten Position anzuzeigen, selbst in dem Fall, wenn eine große Anzahl von Programmen bereitgestellt wird.

EP 1 028 570 A1 betrifft ein Endgerät zur drahtlosen Telekommunikation, in welchem ein selektiertes Icon vergrößert dargestellt wird relativ zu anderen dargestellten Icons und wobei die Icons der Reihefolge nach vergrößert dargestellt werden in einer von mindestens zwei Richtungen, abhängig von der Betätigung von Scrollmitteln.

EP 0 514 397 A2 betrifft ein Verfahren und eine Vorrichtung zum selektiven Enthüllen verdeckter Teile eines Darstellungsfensters unter Verwendung von graphischen Benutzerschnittstellen-Drag-and-Drop-Operationen.

Zur Erleichterung der Bedienung der Datenverarbeitungsanlage ist es bekannt, eine Leiste am Rand der auf den Anzeigemitteln dargestellten Benutzeroberfläche vorzusehen, über die ein Popup-Menü aufgerufen werden kann oder in der die Benutzeroberflächen-Bildobjekte (Icons) anderer Programme abgelegt sind, die als konfigurierbare Softkeys fungieren. Alternativ gibt es für ausgezeichnete Programme Hardkeys, also reale Tasten, über die ein Programm direkt aufgerufen werden kann. Die einzige Interaktion, die zwischen zwei Programmen möglich ist, ist das Ausschneiden im ersten Programm, gefolgt von einem Aufrufen des zweiten Programms und einem Einfügen im zweiten Programm. Dieses Vorgehen, bei dem insbesondere optisch nicht erkannt werden kann, was mit
dem ausgeschnittenen Objekt während der Operation passiert, ist für den Benutzer der Datenverarbeitungsanlage unübersichtlich, schwer nachvollziehbar und führt zu einer kognitiven Überlastung. Es kommt zu Fehlbedienungen der Datenverarbeitungsanlage und somit zu einer Beeinträchtigung ihrer technischen Funktionalität.

Davon ausgehend liegt der Erfindung die technische Aufgabe zugrunde, den Betriebsablauf von Datenverarbeitungsanlagen zu vereinfachen und diese leichter und schneller steuerbar zu machen. Insbesondere soll eine Datenverarbeitungsanlage und ein Verfahren zum Steuern einer Datenverarbeitungsanlage zur Verfügung gestellt werden, bei denen die Möglichkeit der Fehlbedienung weitestgehend reduziert wird.

Die Aufgabe wird durch ein Verfahren zur Steuerung einer Datenverarbeitungsanlage, eine Datenverarbeitungsanlage und ein Programmprodukt mit den Merkmalen der unabhängigen Ansprüche gelöst.

Bevorzugte Ausführungsformen sind in den abhängigen Ansprüchen angegeben. Die Datenverarbeitungsanlage wird über eine Benutzeroberfläche gesteuert, auf der in mehreren Bereichen jeweils Benutzeroberflächen-Bildobjekte dargestellt sind. Dem Aufrufen eines Benutzeroberflächen-Bildobjekts ist das Ausführen einer bestimmten Funktion der Datenverarbeitungsanlage zugeordnet. In der Regel ist dies das Ausführen eines dem Benutzeroberflächen-Bildobjekt zugeordneten Programms oder das Ausführen eines Standardprogramms für den Dokumententyp, von dem das dem Benutzeroberflächen-Bildobjekt zugeordnete Dokument ist. Die Bereiche, in denen die Benutzeroberflächen-Bildobjekte jeweils dargestellt werden, füllen nicht notwendigerweise die gesamte Benutzeroberfläche aus, teilen sich aber zumindest einen Teil der Benutzeroberfläche. Die Bereiche werden in unterschiedlicher Größe auf der Benutzeroberfläche dargestellt. Es ist möglich, Bereiche wahlweise zu aktivieren oder zu deaktivieren. Für einen aktivierten Bereich wird zumindest ein Benutzeroberflächen-Bildobjekt so dargestellt, dass, etwa über die Tastatur, ein direkter Zugriff auf das Benutzeroberflächen-Bildobjekt erfolgen kann. Wird nun ein Bereich aktiviert, so wird er an einer bevorzugten, fest vorgegebenen Position der Benutzeroberfläche dargestellt. Im Gegenzug werden die anderen, deaktivierten Bereiche um den aktivierten Bereich herum gruppiert. Diese Gruppierung erfolgt insbesondere automatisch, indem die anderen Bereiche am Rand oder in der Nähe des Randes des aktivierten Bereiches dargestellt werden.

Die bevorzugte Position liegt vorzugsweise etwa in der Mitte des Teils der Benutzeroberfläche, den sich die Bereiche teilen.

Zur besseren Erreichbarkeit der dem aktivierten Bereich zugeordneten Benutzeroberflächen-Bildobjekte wird dieser Bereich insbesondere vergrößert dargestellt.

Um den Verfahrensablauf weiter zu automatisieren, kann ein anderer, bislang aktivierter Bereich deaktiviert werden bzw. es können alle anderen, bislang aktivierten Bereiche deaktiviert werden, sobald ein Bereich neu aktiviert wird. Bereiche, die deaktiviert werden, werden dabei verkleinert.

Vorzugsweise ist immer nur ein Bereich aktiviert und die Bereiche werden bei dem Verfahren disjunkt dargestellt.

Die Bedienung der Benutzeroberfläche kann erleichtert werden, wenn diese über ein Zeigeinstrument steuerbar ist. Das Zeigeinstrument kann gegenüber der Benutzeroberfläche virtuell, zum Beispiel in Form einer Maus, oder real, zum Beispiel in Form eines Stiftes oder eines Fingers, ausgebildet sein.

Mit Hilfe des Zeigeinstruments lassen sich Benutzeroberflächen-Bildobjekte von einem Bereich in einen anderen Bereich transportieren, indem sie mit dem Zeigeinstrument ausgewählt, von einem Bereich in den anderen Bereich gezogen und dort fallen gelassen werden. Dabei wird vorzugsweise der Bereich, in dem das Benutzeroberflächen-Bildobjekt gezogen wird, durch das Ziehen des Benutzeroberflächen-Bildobjekts in diesen Bereich aktiviert. Entsprechend wird dieser groß in der Mitte der Anzeigemittel der Datenverarbeitungsanlage dargestellt und die anderen, nunmehr deaktivierten Bereiche werden um ihn herum gruppiert.

Vorzugsweise wird das Benutzeroberflächen-Bildobjekt, das in den anderen Bereich gezogen und dort fallen gelassen wurde, an dem Rand dieses Bereichs dargestellt, der dem Bereich, aus dem das Benutzeroberflächen-Bildobjekt herausgezogen wurde, benachbart ist. Anstelle eines Verschiebens des Benutzeroberflächen-Bildobjekts in den anderen Bereich kann wahlweise oder standardmäßig voreingestellt auch eine Verknüpfung im anderen Bereich erstellt werden. Die Verknüpfung wird ebenfalls in Form eines Benutzeroberflächen-Bildobjekts dargestellt und ist entweder eine Verknüpfung zum ursprünglichen Benutzeroberflächen-Bildobjekt, oder zu der dem Benutzeroberflächen-Bildobjekt zugeordneten Datei.

Allgemein lässt sich ein beliebiger Bereich dadurch aktivieren, dass er markiert wird, indem er beispielsweise mit Hilfe des Zeigeinstruments angeklickt wird.

Eine besonders übersichtliche und mit einem gesteigerten Fun-Erlebnis verbundene Darstellung ergibt sich für den Benutzer, wenn beim Aktivieren des Bereiches, der aktiviert wird, die Positionierung von aktiviertem Bereich und anderem Bereich so erfolgt, dass sich ein Rolleffekt ergibt. Für den Fall, dass die deaktivierten Bereiche nur am oberen und unteren Rand des aktivierten Bereiches gruppiert werden, ergibt sich ein solcher Rolleffekt dadurch, dass die Bereiche immer so positioniert werden, als wären sie in einer festen Reihe auf einem Band angeordnet, das man erhält, wenn man die Oberkante des Teils der Benutzeroberfläche, in dem die Bereiche angezeigt werden, mit seiner Unterkante verbindet. Dieses Band stellt dann praktisch eine Rollenoberfläche dar, wobei bei einem Neupositionieren der Bereiche durch Aktivieren eines zuvor deaktivierten Bereichs die Rolle jeweils so gedreht wird, dass der aktivierte Bereich an der bevorzugten Position dargestellt wird.

Für den Fall, dass die deaktivierten Bereiche in mehreren Richtungen am Rand des jeweils aktivierten Bereiches dargestellt werden, kann man sich entsprechend den Teil der Benutzeroberfläche, in dem die Bereiche dargestellt werden, an seinen außenliegenden Kanten zu einer Kugel verbunden denken. Anstatt einer Rolle wird nun eine Kugel gerollt, um den jeweils aktivierten Bereich an einer bevorzugten Position darzustellen, wobei wiederum die Nachbarschaftsbeziehungen zwischen den einzelnen Bereichen erhalten bleiben. Vor allem letzteres trägt entscheidend zur besseren Orientierung des Benutzers auf der Benutzeroberfläche bei.

Allgemein kann auch auf ein Verkleinern der deaktivierten Bereiche verzichtet werden. Stattdessen oder zusätzlich werden diese Bereiche bei der Positionierung um den aktivierten Bereich herum lediglich verschoben. Insbesondere werden sie zur Verstärkung des Rolleffektes aus dem Teil der Benutzeroberfläche, den sich die Bereiche teilen, herausgeschoben und/oder auf der gegenüberliegenden Seite hineingeschoben. Dabei werden die deaktivierten Bereiche vorzugsweise nur teilweise dargestellt, um auf der Benutzeroberfläche genügend Platz für den aktivierten Bereich zu erhalten.

Das die Orientierung erleichternde Aufrechterhalten der Nachbarschaftsbeziehungen lässt sich für den allgemeineren Fall, dass die Bereiche so positioniert werden, dass die Bereiche, die nicht aktiviert sind, am Rand oder in der Nähe des Randes des aktivierten Bereiches angeordnet werden, dadurch realisieren, dass unabhängig davon, welcher Bereich aktiviert ist, je zwei Bereiche immer an ihren gleichen Rändern benachbart sind.

Wird der aktive Bereich als Vieleck dargestellt, so werden die Bereiche vorzugsweise so positioniert, dass ein nicht aktivierter Bereich oder mehrere nicht aktivierte Bereiche jeweils an einer Kante des Vielecks angeordnet ist bzw. sind, als das der aktivierte Bereich dargestellt ist.

Auch hier lassen sich die Nachbarschaftsbeziehungen aufrechterhalten, indem die Bereiche so positioniert werden, dass unabhängig davon, welcher Bereich aktiviert ist, je zwei Bereiche immer an der gleichen ihrer Kanten benachbart sind.

Vorteilhaft ist das Verfahren so ausgestaltet, dass die Bereiche bei jedem Schritt so positioniert und in ihrer Größe gewählt werden, dass alle Bereiche auf dem Teil der Benutzeroberfläche dargestellt werden.

Darüber hinaus können die Bereiche bei jedem Schritt des Verfahrens so positioniert und in ihrer Größe gewählt werden, dass kein Bereich einen Teilbereich eines anderen Bereiches verdeckt.

Nach dem erfindungsgemäßen Verfahren wird insbesondere eine Benutzeroberfläche für ein Betriebssystem zur Verfügung gestellt.

Die Erfindung betrifft weiterhin eine Anordnung, insbesondere eine Datenverarbeitungsanlage, die eingerichtet ist eines der vorstehend genannten Verfahren auszuführen. Eine solche Anordnung lässt sich zum Beispiel durch entsprechendes Programmieren und Einrichten eines Computers, insbesondre PDAs, oder einer Rechenanlage realisieren.

Ein Programmprodukt für eine Datenverarbeitungsanlage, das Softwarecodeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in für die Datenverarbeitungsanlage ausführbaren Code ausführen. Die Softwarecodeabschnitte werden dazu gespeichert. Dabei wird unter einem Programmprodukt das Programm als handelbares Produkt verstanden. Es kann in beliebiger Form vorliegen, so zum Beispiel auf Papier, einem Computer lesbaren Datenträger oder über ein Netz verteilt.

Weitere wesentliche Merkmale und Vorteile der Erfindung ergeben sich aus der Beschreibung eines Ausführungsbeispiels anhand der Zeichnung.

Dabei zeigt
- Figur 1: ein Ausführungsbeispiel mit drei Bereichen
- Figur 2: das Ausführungsbeispiel nach Figur 1 mit dargestellten Benutzeroberflächen-Bildobjekten
- Figur 3: einen Rolleffekt bei drei Bereichen
- Figur 4: einen Rolleffekt bei vier Bereichen
- Figur 5: den Rolleffekt bei vier Bereichen in einer anderen Richtung
- Figur 6: einen Rolleffekt bei sechs Bereichen
- Figur 7: den Rolleffekt bei sechs Bereichen in einer anderen Richtung
- Figur 8: den Rolleffekt bei sechs Bereichen in einer weiteren Richtung
- Figur 9: einen Rolleffekt bei neun Bereichen
- Figur 10: das dem Rolleffekt bei neun Bereichen zugrunde liegende Schema.

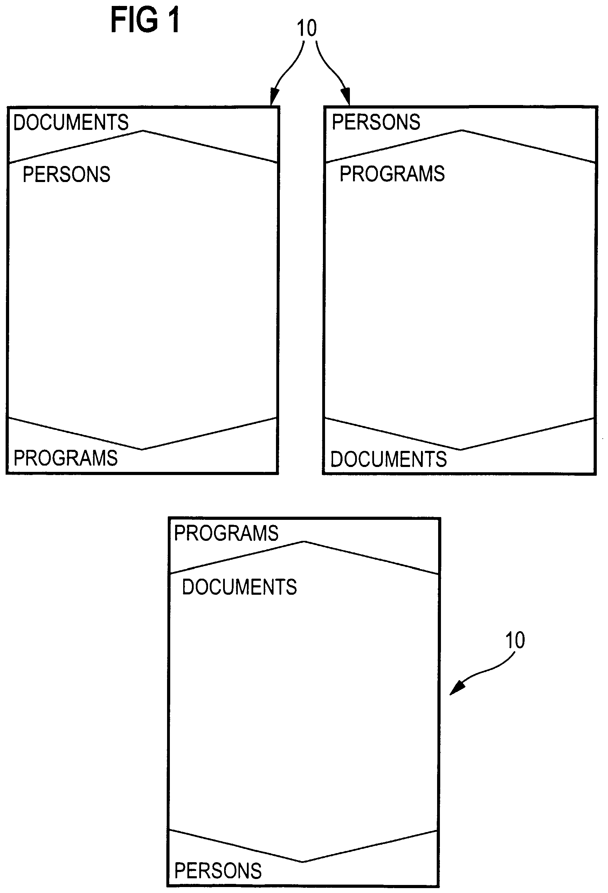

In Figur 1 ist ein Teil 10 einer Benutzeroberfläche zu drei verschiedenen Zeitpunkten dargestellt. Den Teil 10 der Benutzeroberfläche teilen sich die drei Bereiche PERSONS, DOCUMENTS und PROGRAMS.

Zu einem ersten Zeitpunkt ist der Bereich PERSONS aktiviert.

Zu einem zweiten Zeitpunkt wird durch Auswahl des Benutzers der Bereich PROGRAMS aktiviert. Daraufhin wird durch das Verfahren zur Steuerung der Datenverarbeitungsanlage, von der die Benutzeroberfläche dargestellt wird, der Bereich PROGRAMS an einer bevorzugten Position der Benutzeroberfläche in etwa in der Mitte des Teils 10 der Benutzeroberfläche dargestellt, während die anderen Bereiche DOCUMENTS und PERSONS um den aktivierten Bereich PROGRAMS herum gruppiert werden. Das Gruppieren der anderen Bereiche um den aktivierten Bereich herum erfolgt, indem die anderen Bereiche neu positioniert werden. Der Bereich PROGRAMS, der aktiviert wird, wird vergrößert dargestellt. Gleichzeitig wird der bislang aktivierte Bereich PERSONS deaktiviert und verkleinert.

Die drei Bereiche sind disjunkt, das heißt, sie haben keine Überschneidungen.

In einem dritten Zeitpunkt wird durch Auswahl des Benutzers mittels eines hier nicht dargestellten Zeigeinstruments der Bereich DOCUMENTS aktiviert. Dies geschieht dadurch, dass mit dem Zeigeinstrument auf den zu aktivierenden Bereich DOCUMENTS gezeigt und dieser durch Niederdrücken des Zeigeinstruments oder einer entsprechenden Taste markiert wird.

Daraufhin wird der Bereich DOCUMENTS, der aktiviert wird, an der gleichen bevorzugte Position in etwa der Mitte des Teils 10 der Benutzeroberfläche dargestellt, den sich die Bereiche teilen. Die anderen Bereiche PERSONS, PROGRAMS werden um den aktivierten Bereich herum gruppiert, indem sie an seinen oberen bzw. seinem unteren Rand dargestellt werden. Zwischen dem aktivierten Bereich und dem Rand des Teils 10 der Benutzeroberfläche, den sich die Bereiche teilen, wird so immer nur höchstens ein deaktivierter Bereich dargestellt.

Durch längeres Verweilen mit dem Zeigeinstrument über einem deaktivierten Bereich oder durch eine andere geeignete Interaktionsgeste wird ein Verschieben (Scrollen) der Bereiche ausgelöst, durch das, insbesondere unter Ausnutzung des Rolleffektes, zum nächsten deaktivierten Bereich weitergeblättert wird. Dabei wird zum an der gegenüberliegenden Kante des Teils 10 liegenden deaktivierten Bereich gescrollt, indem der bislang deaktivierte Bereich, über dem das Zeigeinstrument vom Benutzer positioniert wird, aktiviert und groß in der Mitte dargestellt wird. Der bislang aktivierte Bereich wird deaktiviert und der andere bislang deaktivierte Bereiche an der Stelle des bislang deaktivierten Bereichs angezeigt, über dem das Zeigeinstrument vom Benutzer positioniert wird. Danach pausiert das Verfahren für einen Augenblick und der Benutzer kann entscheiden, ob er das Zeigeinstrument, gegebenenfalls mit einem damit verbundenen Benutzeroberflächen-Bildobjekt, in den jetzt neu aktivierten Bereich zieht, um das Benutzeroberflächen-Bildobjekt mit einem Benutzeroberflächen-Bildobjekt in diesem Bereich zu vermählen. Oder der Benutzer bewegt das Zeigeinstrument nicht, sondern hält es weiter über dem weiterhin deaktivierten Bereich, der durch das Verschieben unter das Zeigeinstrument gelangt ist. Dann wird das Scrollen nach der Pause fortgesetzt.

Die im letzten Absatz genannte Ausführungsform ist besonders geeignet für eine größere Anzahl von deaktivierten Bereichen, insbesondere wenn das Verfahren entgegen dem Ausführungsbeispiel so ausgestaltet ist, dass zwischen dem aktivierten Bereich und dem Rand des Teils 10 der Benutzeroberfläche, den sich die Bereiche teilen, mehr als ein deaktivierter Bereich dargestellt wird. Dabei wird durch längeres Verweilen mit dem Zeigeinstrument über einem deaktivierten Bereich oder durch eine andere geeignete Interaktionsgeste ein Verschieben der Bereiche ausgelöst, durch das in einer vorgegebenen Reihenfolge zu einem anderen deaktivierten Bereich weitergeblättert wird.

Der Teil 10 der Benutzeroberfläche, den sich die Bereiche teilen, nimmt die gesamte Benutzeroberfläche ein.

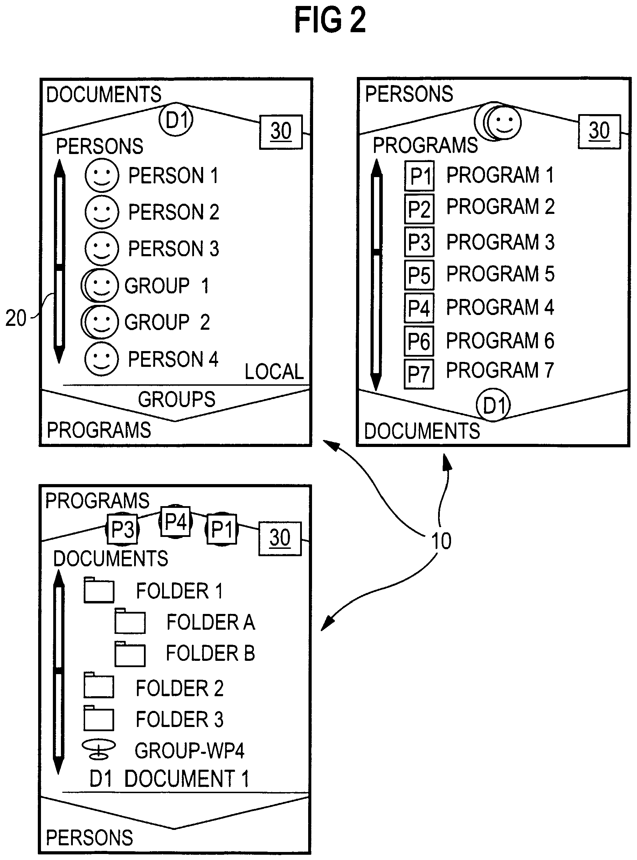

Auch in Figur 2 ist wiederum der Teil 10 der Benutzeroberfläche zu drei verschiedenen Zeitpunkten zu erkennen. Im Gegensatz zu Figur 1 sind nunmehr auch Benutzeroberflächen-Bildobjekte dargestellt, die in Figur 1 der Übersicht halber zunächst ausgelassen wurden. Im Ausführungsbeispiel sind die Benutzeroberflächen-Bildobjekte entsprechend der drei disjunkten Bereiche PERSONS, PROGRAMS, DOCUMENTS in drei disjunkte Klassen eingeteilt. In der Klasse PERSONS finden sich Elemente in Form von Personen PERSON 1, PERSON 2, PERSON 3, PERSON 4 und Personengruppen GROUP 1, GROUP 2. Weitere Gruppen und Personen sind erreichbar, indem über einen Schiebebalken 20 der aktivierte Bereich PERSONS auf dem Teil 10 der Benutzeroberfläche durchgescrollt werden kann.

Den Elementen, Gruppen und Personen sind Benutzeroberflächen-Bildobjekte zugeordnet, die bei Personen vorteilhaft als Bild des Kopfes der jeweiligen Person ausgebildet sind. Stattdessen kann das Benutzeroberflächen-Bildobjekt einer Person aber auch ein allgemeines Personenpiktogramm in Verbindung mit dem Namen der Person sein.

Elemente, die nicht zur Klasse des aktivierten Bereichs gehören aber im aktivierten Bereich verfügbar sein sollen, werden im aktivierten Bereich verfügbar gemacht, indem ein das jeweilige Element repräsentierendes Benutzeroberflächen-Bildobjekt am Rand des aktivierten Bereichs dargestellt wird, der an die Darstellung des Bereichs grenzt, zu dessen Klasse das Element gehört. Zum erste Zeitpunkt in Figur 2 wird das Dokument DOCUMENT 1 im aktivierten Bereich PERSONS zugänglich gemacht, indem ein zum Dokument DOCUMENT 1 gehörendes Benutzeroberflächen-Bildobjekt D1 am Rand des Bereichs PERSONS dargestellt wird, der an den Bereich DOCUMENTS grenzt.

Statt am Rand könnte das Benutzeroberflächen-Bildobjekt auch in der Nähe des Randes oder auf dem Rand dargestellt werden. Statt der Darstellung im aktivierten Bereich kann auch eine Darstellung von in anderen Bereichen zugänglich zu machenden Benutzeroberflächen-Bildobjekten im deaktivierten Bereich erfolgen, wenn diese am Rand zum aktivierten Bereich oder in der Nähe des Randes zum aktivierten Bereichs stattfindet.

Im dargestellten Ausführungsbeispiel erfolgt die Darstellung von einem anderen Bereich zugänglich zu machenden Elementen jeweils in Blasen in Form von Kreisen, um für den Benutzer das Anhaften des jeweiligen Benutzeroberflächen-Bildobjekts am Rand des anderen Bereiches zu verbildlichen.

Wird nun zum ersten Zeitpunkt mit Hilfe eines nicht dargestellten Zeigeinstruments die Gruppe GROUP 1 ausgewählt, in den Bereich PROGRAMS gezogen und dort fallen gelassen, so wird dadurch der Bereich PROGRAMS aktiviert. Vom Verfahren zur Steuerung der Datenverarbeitungsanlage wird daraufhin der Bereich PROGRAMS an der bevorzugten Position in der Mitte des Teils 1 der Benutzeroberfläche vergrößert dargestellt, den sich die Bereiche teilen. Der bislang aktivierte Bereich PERSONS wird deaktiviert und verkleinert an dem Rand des aktivierten Bereichs PROGRAMS dargestellt, an dem er bereits dargestellt wurde, als der Bereich PERSONS noch aktiviert und der Bereich PROGRAMS noch deaktiviert war. Der Bereich DOCUMENTS bleibt weiterhin deaktiviert und verkleinert. Seine Darstellung wird jedoch auf dem Teil 1 der Benutzeroberfläche verschoben, damit er weiterhin an dem Rand des Bereichs PROGRAMS dargestellt wird, an dem er sich befand, bevor der Bereich PROGRAMS aktiviert wurde. Dieser Rand wird dadurch gebildet, dass der Teil 1 der Benutzeroberfläche an seinen jeweils gegenüberliegenden offenen Kanten in Gedanken zusammengeführt wird.

Durch das Auswählen, Ziehen und Fallenlassen des zum Element GROUP 1 zugehörigen Benutzeroberflächen-Bildobjekts wird das Element 1 dem aktivierten Bereich PROGRAMS zugänglich gemacht. Dazu wird ein zum Element GROUP 1 gehörendes Benutzeroberflächen-Bildobjekt in einer Blase am Rand zwischen dem aktivierten Bereich PROGRAMS und dem bislang aktivierten und nunmehr deaktivierten Bereich PERSONS dargestellt.

Weiterhin wird das Benutzeroberflächen-Bildobjekt D1 des Elements DOCUMENT 1 am Rand des Bereichs PROGRAMS zum Bereich DOCUMENTS in einer Blase dargestellt. Dieses Element war bereits in einem vorausgegangenen, nicht dargestellten Schritt dem Bereich PROGRAMS zugänglich gemacht worden.

Dadurch, dass die Elemente GROUP 1 und DOCUMENT 1 über die zugehörigen Benutzeroberflächen-Bildobjekte dem aktivierten Bereich zugänglich gemacht wurden, kann der Benutzer der Datenverarbeitungsanlage die Elemente leicht mit den im Bereich PROGRAMS befindlichen Elementen vermählen. Er muss sich dazu im Gegensatz zum Stand der Technik nicht mehr merken, welches Element er ausgeschnitten hat, und kann wahlweise auch mehrere Elemente in einem anderen Bereich zugänglich machen. So kann er zum Beispiel das Element GROUP 1 mit dem Programm PROGRAM 2 vermählen, indem er das zum Element GROUP 1 gehörende Benutzeroberflächen-Bildobjekt auf das Benutzeroberflächen-Bildobjekt P2 des Elements PROGRAM 2 zieht und dort fallen lässt.

Die daraufhin von der Datenverarbeitungsanlage ausgeführte Funktion wird im Wesentlichen durch die Art des Programms PROGRAM 2 bestimmt. So kann beispielsweise bei einer Ausprägung des Programms PROGRAM 2 als Kommunikationsprogramm eine Konferenzschaltung zu den zum Element GROUP 1 gehörigen Personen aufgebaut werden.

Wird dagegen das Element DOCUMENT 1 mit dem Programm PROGRAM 4 durch Ziehen und Fallenlassen des Benutzeroberflächen-Bildobjekts D1 auf das Benutzeroberflächen-Bildobjekt P4 mit diesem vermählt, so kann beispielsweise eine Textverarbeitung aufgerufen und auf dem Dokument D1 ausgeführt werden.

Schließlich ist es auch vorstellbar, sowohl das Element GROUP 1 als auch das Element DOCUMENT 1 mit einem Programm zu vermählen, um etwa einen Brief an alle zum Element GROUP 1 gehörenden Personen zu senden.

Wenn zum zweiten Zeitpunkt die Benutzeroberflächen-Bildobjekte P1, P3, P4 der Programme PROGRAM 1, PROGRAM 3, PROGRAM 4 mit dem Zeigeinstrument markiert und in den deaktivierten Bereich DOCUMENTS gezogen werden, so wird dieser Bereich DOCUMENTS in der zuvor beschriebenen Weise aktiviert und die Programme PROGRAM 1, PROGRAM 3, PROGRAM 4 werden durch die Darstellung von zugehörigen Benutzeroberflächen-Bildobjekten P1, P3, P4 in Blasen am Rand zwischen dem Bereich DOCUMENTS und dem Bereich PROGRAMS zur Verfügung gestellt.

Soll ein Element nicht mehr einem Bereich zur Verfügung gestellt werden, dem es nicht zugehört, so wird das zugehörige Benutzeroberflächen-Bildobjekt vom Benutzer einfach mit Hilfe des Zeigeinstruments ausgewählt, in den Bereich zurückgezogen, dem es zugehört, und dort fallen gelassen. Wahlweise kann bei dieser Operation der Bereich, in dem das Benutzeroberflächen-Bildobjekt fallen gelassen wird, aktiviert werden oder der aktivierte Bereich, aus dem das Benutzeroberflächen-Bildobjekt herausgezogen wurde, aktiviert bleiben.

Schließlich ist auf dem Teil 10 der Benutzeroberfläche, den sich die Bereiche teilen, noch ein Feld 30 vorgesehen, durch dessen Anwahl das Verfahren verlassen und zu anderen Anwendungen übergegangen werden kann.

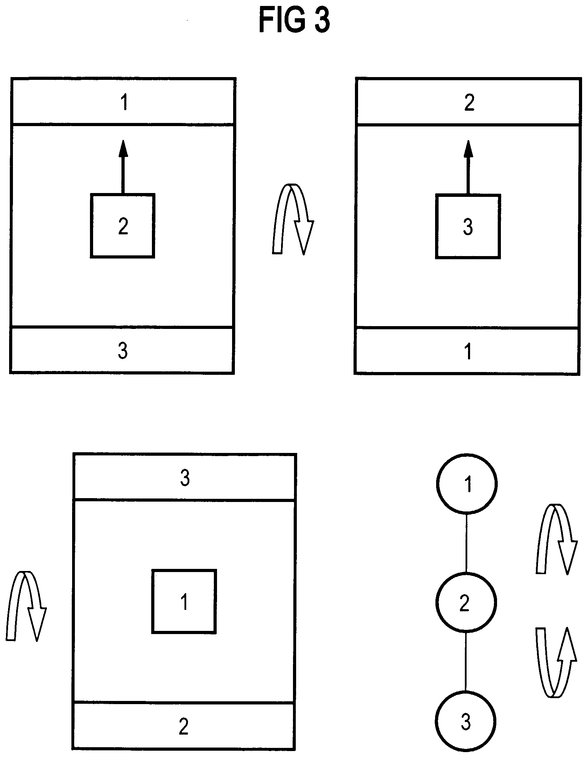

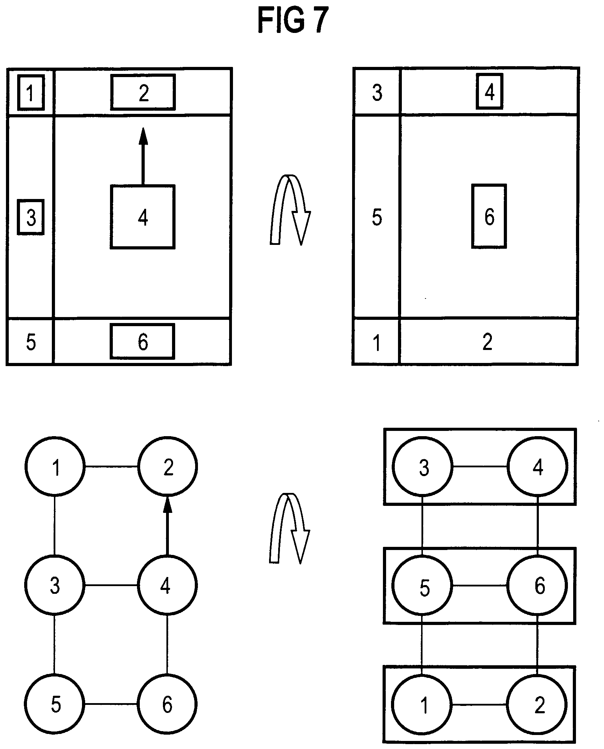

In den Figuren 3 bis 10 wird erläutert, wie die Positionierung von aktiviertem Bereich und anderen Bereichen so erfolgen kann, dass sich ein Rolleffekt ergibt. Das Verfahren wird für n=3, 4, 6 und 9 Bereiche angegeben. Grundsätzlich ist das Verfahren aber auch mit einer beliebigen Anzahl n von Bereichen durchführbar, solange die Anzahl n der Bereiche so bemessen ist, dass man Rotationsschläuche in beide Rollrichtungen bilden kann. Es wird aber empfohlen, die Anzahl n der Bereiche so klein wie möglich zu machen, damit eine übersichtliche Darstellung erreicht wird, die auch vom Platz her noch Sinn macht. In der Praxis hat sich n=3 als eine sehr geeignete Anzahl an Bereichen herausgestellt.

Figur 3 zeigt eine Ausführungsform des Rolleffektes bei drei Bereichen. Dabei ist, wie in den in den Figuren 1 und 2 dargestellten Beispielen, der aktivierte Bereich groß in der Mitte dargestellt, während einer der beiden deaktivierten Bereiche klein über dem aktivierten Bereich und der andere der beiden deaktivierten Bereich klein unter dem aktivierten Bereich angezeigt wird. Zur Verdeutlichung des Rolleffektes kann man sich die obere Kante der Anzeige in Gedanken mit ihrer unteren Kante verbunden denken. Im ersten Bild von Figur 3 heißt das, dass die obere Kante von Bereich 1 in Gedanken an die untere Kante von Bereich 3 angrenzt. Bei einem Aktivieren eines beliebigen deaktivierten Bereichs bleibt nun diese Nachbarschaftsbeziehung erhalten. Das gleiche gilt für alle anderen Nachbarschaftsbeziehungen der Bereiche. So grenzt, gleichgültig welcher Bereich gerade aktiviert ist, immer die untere Kante des Bereichs 1 an die obere Kante des Bereichs 2, die untere Kante des Bereichs 2 an die obere Kante des Bereichs 3 und die untere Kante des Bereichs 3 an die obere Kante des Bereichs 1. Die Freiheitsgrade unter denen die Bereiche positioniert werden können, sind genau so eingeschränkt, als ob sich die Bereiche auf der Oberfläche einer Rolle befänden. Das Rollen oder Rotieren der Rolle ist jeweils in beide Richtungen möglich.

Besonders vorteilhaft lässt sich der Rolleffekt für eine Anzahl von n≥3 einsetzen, da er hier vom Benutzer als solcher erkannt wird und die Orientierung des Benutzers wesentlich erleichtert.

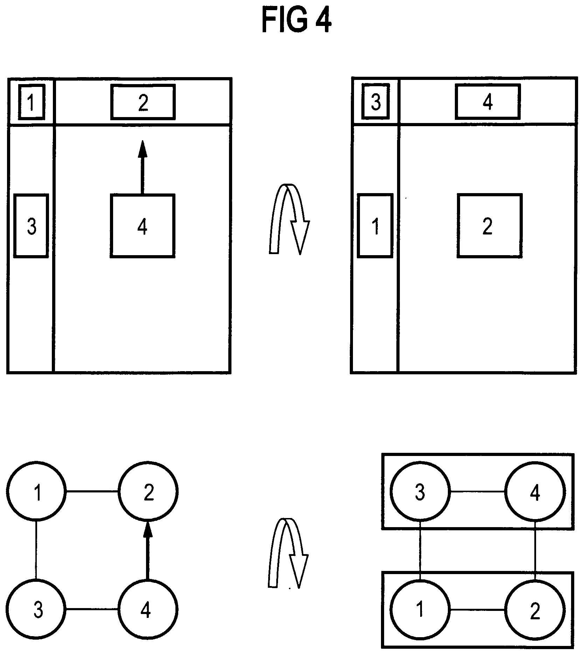

In Figur 4 ist der Rolleffekt für eine Anzahl von n=4 Bereichen dargestellt. Hierbei werden beide Rollrichtungen benutzt. Dadurch befindet sich zwischen dem jeweils aktivierten Bereich und der Kante des Teils der Benutzeroberfläche, den sich die Bereiche teilen, weiterhin jeweils maximal ein deaktivierter Bereich. Zwar wäre es auch bei einer Anzahl von n=4 Bereichen noch möglich, nur eine Rollrichtung zu verwenden, wie dies in Figur 3 dargestellt ist. Jedoch geriete dadurch die Anzeige unübersichtlicher und vor allem wäre es schwieriger, Benutzeroberflächen-Bildobjekte von einem Bereich treffgenau in einen anderen Bereich zu ziehen.

Die beiden Rollrichtungen stehen senkrecht aufeinander. Die drei deaktivierten Bereiche sind links, links oberhalb und oberhalb des aktivierten Bereiches angeordnet. Dadurch liegen sie für Rechtshänder immer im Blickfeld und werden nicht durch die bedienende Hand abgedeckt. Für eine linkshändige Bedienung kann das Verfahren bzw. die Datenverarbeitungsanlage entsprechend umgestellt werden.

Auch dieses Ausführungsbeispiel verdeutlich eindrucksvoll, dass es durch die Erfindung jederzeit möglich ist, vom vergrößerten, aktivierten Bereich in jeden beliebigen anderen Bereich zu gelangen bzw. ein Benutzeroberflächen-Bildobjekt aus dem aktivierten Bereich in einen anderen Bereich zu ziehen.

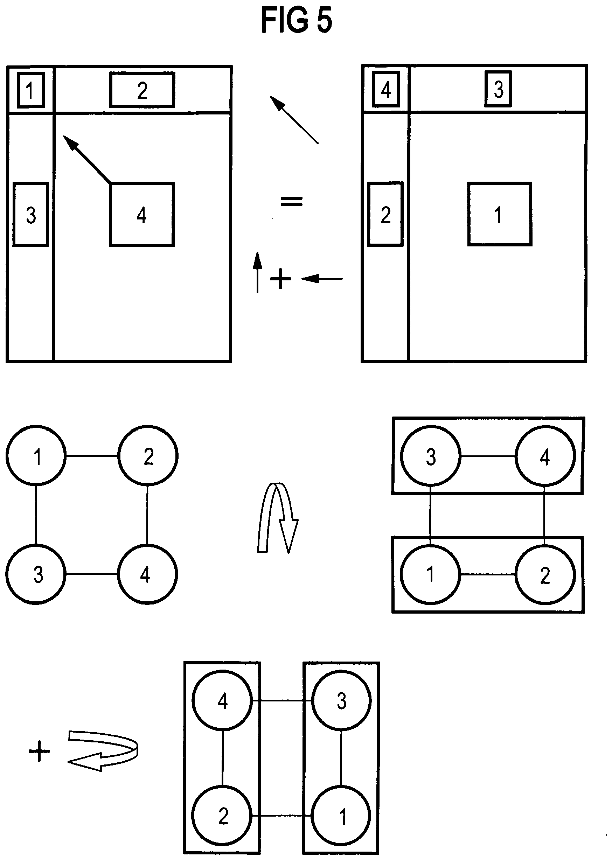

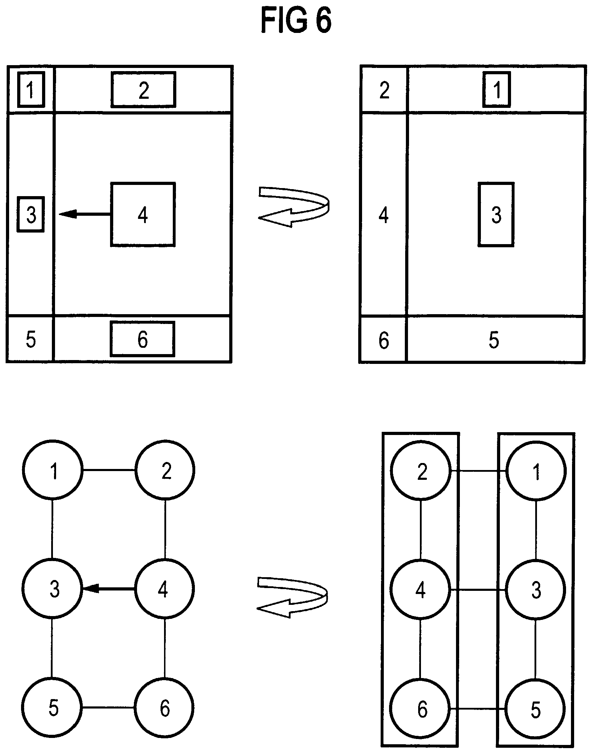

In Figur 5 ist der Bewegungsablauf für den Fall beschrieben, dass der Bereich aktiviert wird, der sich an der Ecke des bislang aktivierten Bereiches befindet. Hierbei beinhaltet der Rolleffekt zwei aufeinander senkrecht stehende Rollbewegungen, die allerdings nicht nacheinander, sondern gleichzeitig ausgeführt werden. Die Figuren 6 bis 8 verdeutlichen den Rolleffekt für eine Anzahl von n=6 Bereichen. Wie man erkennt, gibt es bei jeder Bewegung horizontal und vertikal Gruppen von Bereichen, die miteinander bewegt werden. Dies sind die oben erwähnten Rotationsschläuche. Sie sind in den Figuren durch zusammenfassende Rechtecke um die durch Kreise repräsentierten Bereiche dargestellt.

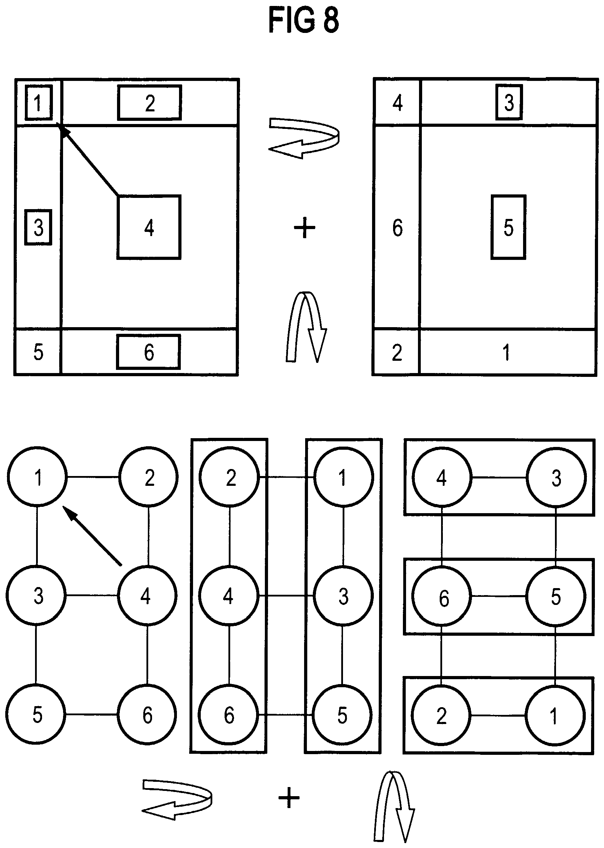

Figur 8 zeigt wiederum den Bewegungsablauf bei Aktivierung eines bislang deaktivierten Bereiches, der an einer Ecke des bislang aktivierten Bereiches liegt. Die dabei auftretenden Diagonalbewegungen sind Kombinationen aus Horizontal- und Vertikalbewegungen, die gleichzeitig ausgeführt werden.

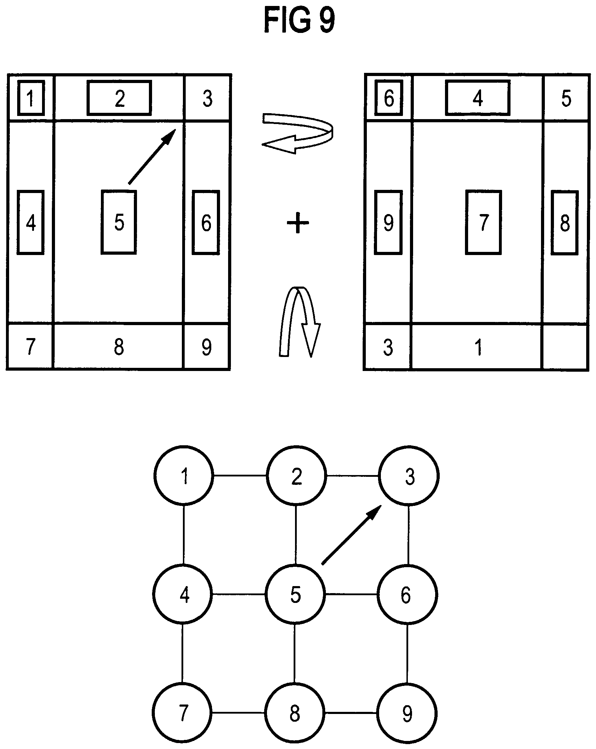

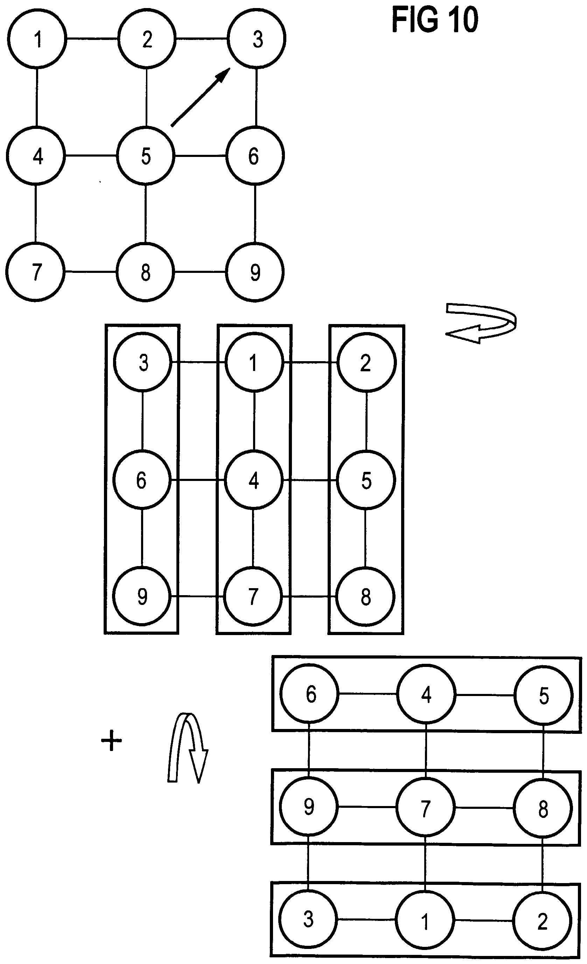

Die Figuren 9 und 10 zeigen schließlich den Rolleffekt für eine Anzahl von n=9 Bereichen. Beispielhaft ist auch hier der Bewegungsablauf für eine Aktivierung über Eck dargestellt.

## Patentansprüche

1. Verfahren zur Steuerung einer Datenverarbeitungsanlage über eine Benutzeroberfläche, auf der in mehreren Bereichen jeweils Benutzeroberflächen-Bildobjekte darstellbar sind, deren Aufrufen das Ausführen bestimmter Funktionen der Datenverarbeitungsanlage zugeordnet ist,
bei dem sich die Bereiche einen Teil (10) der Benutzeroberfläche teilen,
bei dem die Bereiche in unterschiedlicher Größe auf der Benutzeroberfläche dargestellt werden,
bei dem ein Bereich, wenn er aktiviert wird, an einer bevorzugten Position der Benutzeroberfläche dargestellt wird, während die anderen Bereiche um den aktivierten Bereich herum gruppiert werden, **dadurch gekennzeichnet, dass**, wenn eines der Benutzeroberflächen-Bildobjekte in einen anderen Bereich gezogen und dort fallen gelassen wurde, das Benutzeroberflächen-Bildobjekt an dem Rand dieses Bereichs dargestellt wird, der dem Bereich, aus dem das Benutzeroberflächen-Bildobjekt herausgezogen wurde, benachbart ist.

2. Verfahren nach Anspruch 1, bei dem die bevorzugte Position in etwa in der Mitte des Teils (10) der Benutzeroberfläche liegt, den sich die Bereiche teilen.

3. Verfahren nach einem der vorhergehenden Ansprüche, bei dem ein Bereich, wenn er aktiviert wird, vergrößert wird.

4. Verfahren nach einem der vorhergehenden Ansprüche, bei dem, wenn ein Bereich aktiviert wird, ein anderer, bislang aktivierter Bereich deaktiviert wird.

5. Verfahren nach Anspruch 4, bei dem der Bereich, der deaktiviert wird, verkleinert wird.

6. Verfahren nach einem der vorhergehenden Ansprüche, bei dem die Bereiche disjunkt sind.

7. Verfahren nach einem der vorhergehenden Ansprüche, bei dem die Benutzeroberfläche über ein Zeigeinstrument gesteuert wird.

8. Verfahren nach einem der vorhergehenden Ansprüche, bei dem ein Benutzeroberflächen-Bildobjekt mit dem Zeigeinstrument von einem Bereich in einen anderen Bereich gezogen wird.

9. Verfahren nach Anspruch 8, bei dem der Bereich, in den das Benutzeroberflächen Bildobjekt gezogen wird, durch das Ziehen des Benutzeroberflächen-Bildobjekts in den Bereich aktiviert wird.

10. Verfahren nach den Ansprüchen 1 und 7, bei dem der Bereich, der aktiviert wird, durch Markieren mit Hilfe des Zeigeinstrumentes aktiviert wird.

11. Verfahren nach einem der vorhergehenden Ansprüche, bei dem beim Aktivieren des Bereichs die Positionierung von aktiviertem Bereich und anderen Bereichen so erfolgt, dass sich ein Rolleffekt ergibt.

12. Verfahren nach einem der vorhergehenden Ansprüche, bei dem die Bereiche so positioniert werden, dass die Bereiche, die nicht aktiviert worden sind, am Rand oder in der Nähe des Randes des aktivierten Bereiches angeordnet werden.

13. Verfahren nach Anspruch 12, bei dem die Bereiche so positioniert werden, dass unabhängig davon, welcher Bereich aktiviert ist, je zwei Bereiche immer an ihren gleichen Rändern benachbart sind.

14. Verfahren nach einem der vorhergehenden Ansprüche, bei dem der aktive Bereich als Vieleck dargestellt wird.

15. Verfahren nach Anspruch 14, bei dem die Bereiche so positioniert werden, dass ein nicht aktivierter Bereich oder mehrere nicht aktivierte Bereiche jeweils an einer Kante des Vielecks angeordnet sind.

16. Verfahren nach Anspruch 15, bei dem die Bereiche so positioniert werden, dass unabhängig davon, welcher Bereich aktiviert ist, je zwei Bereiche immer an der gleichen ihrer Kanten benachbart sind.

17. Verfahren nach einem der vorhergehenden Ansprüche, bei dem die Bereiche so positioniert und in ihrer Größe gewählt werden, dass alle Bereiche auf der Benutzeroberfläche dargestellt werden.

18. Verfahren nach einem der vorhergehenden Ansprüche, bei dem die Bereiche so positioniert und in ihrer Größe gewählt werden, dass kein Bereich einen Teilbereich eines anderen Bereichs verdeckt.

19. Datenverarbeitungsanlage mit Anzeigemitteln zur Anzeige einer Benutzeroberfläche, auf der in mehreren Bereichen jeweils Benutzeroberflächen-Bildobjekte darstellbar sind, deren Aufrufen das Ausführen bestimmter Funktionen der Datenverarbeitungsanlage zugeordnet ist,
bei der sich die Bereiche einen Teil (10) der Benutzeroberfläche teilen,
bei der die Bereiche der Datenverarbeitungsanlage in unterschiedlicher Größe auf der Benutzeroberfläche darstellbar sind und
die so eingerichtet ist, dass ein Bereich, wenn er aktiviert wird, an einer bevorzugten Position der Benutzeroberfläche dargestellt wird, während die anderen Bereiche um den aktivierten Bereich herum gruppiert werden, **dadurch gekennzeichnet, dass**, wenn eines der Benutzeroberflächen-Bildobjekte in einen anderen Bereich gezogen und dort fallen gelassen wurde, das Benutzeroberflächen-Bildobjekt an dem Rand dieses Bereichs dargestellt wird, der dem Bereich, aus dem das Benutzeroberflächen-Bildobjekt herausgezogen wurde, benachbart ist.

20. Programmprodukt für eine Datenverarbeitungsanlage, das Softwarecodeabschnitte enthält, mit denen ein Verfahren nach zumindest einem der Ansprüche 1 bis 18 auf einer Datenverarbeitungsanlage ausgeführt werden kann.

## Claims

1. Method for controlling a data processing installation via a user interface on which, in each of multiple areas, user interface image objects are depictable, the calling of which has the associated execution of particular functions of the data processing installation,
in which the areas divide a portion (10) of the user interface,
in which the areas are depicted in different sizes on the user interface,
in which an area, when activated, is depicted at a preferred position on the user interface, while the other areas are grouped around the activated area, **characterized in that** when one of the user interface image objects has been dragged to another area and dropped there, the user interface image object is depicted at the edge of this area that is adjacent to the area from which the user interface image object has been dragged.

2. Method according to Claim 1, in which the preferred position is approximately in the centre of the portion (10) of the user interface that the areas divide.

3. Method according to either of the preceding claims, in which an area, when activated, is enlarged.

4. Method according to one of the preceding claims, in which when an area is activated, another, hitherto activated, area is deactivated.

5. Method according to Claim 4, in which the area that is deactivated is reduced.

6. Method according to one of the preceding claims, in which the areas are disjunct.

7. Method according to one of the preceding claims, in which the user interface is controlled by means of a pointer instrument.

8. Method according to one of the preceding claims, in which a user interface image object is dragged from one area to another area using the pointer instrument.

9. Method according to Claim 8, in which the area to which the user interface image object is dragged is activated by the dragging of the user interface image object to the area.

10. Method according to Claims 1 and 7, in which the area that is activated is activated by marking by means of the pointer instrument.

11. Method according to one of the preceding claims, in which when the area is activated, the activated area and other areas are positioned such that a rolling effect is obtained.

12. Method according to one of the preceding claims, in which the areas are positioned such that the areas that have not been activated are arranged at the edge or close to the edge of the activated area.

13. Method according to Claim 12, in which the areas are positioned such that regardless of which area is activated, two areas are always adjacent at their identical edges in each case.

14. Method according to one of the preceding claims, in which the active area is depicted as a polygon.

15. Method according to Claim 14, in which the areas are positioned such that an unactivated area or multiple unactivated areas are respectively arranged at an edge of the polygon.

16. Method according to Claim 15, in which the areas are positioned such that regardless of which area is activated, two areas are always adjacent at the same one of their edges in each case.

17. Method according to one of the preceding claims, in which the areas are positioned and have their size chosen such that all the areas are depicted on the user interface.

18. Method according to one of the preceding claims, in which the areas are positioned and have their size chosen such that no area conceals a subarea of another area.

19. Data processing installation having display means for displaying a user interface on which, in each of multiple areas, user interface image objects are depictable, the calling of which has the associated execution of particular functions of the data processing installation,
in which the areas divide a portion (10) of the user interface,
in which the areas of the data processing installation are depictable in different sizes on the user interface, and
which is set up such that an area, when activated, is depicted at a preferred position on the user interface, while the other areas are grouped around the activated area, **characterized in that** when one of the user interface image objects has been dragged to another area and dropped there, the user interface image object is depicted at the edge of this area that is adjacent to the area from which the user interface image object has been dragged.

20. Program product for a data processing installation, which includes software code sections that can be used to carry out a method according to at least one of Claims 1 to 18 on a data processing installation.

## Revendications

1. Procédé de commande d'une installation de traitement de données via une interface utilisateur sur laquelle peuvent être représentés, dans plusieurs secteurs, respectivement des objets d'image d'interface utilisateur à l'appel desquels est associée l'exécution de certaines fonctions de l'installation de traitement de données, dans lequel
les secteurs se partagent une partie (10) de l'interface utilisateur,
les secteurs sont représentés en différente grandeur sur l'interface utilisateur,
un secteur, s'il est activé, est représenté à une position préférentielle de l'interface utilisateur, tandis que les autres secteurs sont groupés autour du secteur activé, **caractérisé en ce que**, si l'un des objets d'image d'interface utilisateur est tiré dans un autre secteur et si on l'y laisse tomber, l'objet d'image d'interface utilisateur est représenté au bord de ce secteur qui est voisin du secteur d'où on a tiré l'objet d'image d'interface utilisateur.

2. Procédé selon la revendication 1, dans lequel la position préférentielle se trouve approximativement au milieu de la partie (10) de l'interface utilisateur que se partagent les secteurs.

3. Procédé selon l'une des revendications précédentes, dans lequel un secteur, s'il est activé, est agrandi.

4. Procédé selon l'une des revendications précédentes, dans lequel, si un secteur est activé, un autre secteur jusqu'à présent activé est désactivé.

5. Procédé selon la revendication 4, dans lequel le secteur qui est désactivé est réduit.

6. Procédé selon l'une des revendications précédentes, dans lequel les secteurs sont disjoints.

7. Procédé selon l'une des revendications précédentes, dans lequel l'interface utilisateur est commandée via un instrument d'affichage.

8. Procédé selon l'une des revendications précédentes, dans lequel un objet d'image d'interface utilisateur est tiré avec l'instrument d'affichage d'un secteur vers un autre secteur.

9. Procédé selon la revendication 8, dans lequel le secteur vers lequel est tiré l'objet d'image d'interface utilisateur est activé par le fait que l'objet d'image d'interface utilisateur est tiré vers le secteur.

10. Procédé selon les revendications 1 et 7, dans lequel le secteur qui est activé est activé par marquage à l'aide de l'instrument d'affichage.

11. Procédé selon l'une des revendications précédentes, dans lequel, à l'activation du secteur, le positionnement du secteur activé et d'autres secteurs est effectué de telle sorte qu'il en résulte un effet de roulement.

12. Procédé selon l'une des revendications précédentes, dans lequel les secteurs sont positionnés de telle sorte que les secteurs qui n'ont pas été activés se trouvent au bord ou à proximité du bord du secteur activé.

13. Procédé selon la revendication 12, dans lequel les secteurs sont positionnés de telle sorte que, indépendamment de la question de savoir quel secteur est activé, respectivement deux secteurs sont toujours voisins en leurs bords identiques.

14. Procédé selon l'une des revendications précédentes, dans lequel le secteur actif est représenté sous la forme d'un polygone.

15. Procédé selon la revendication 14, dans lequel les secteurs sont positionnés de telle sorte qu'un secteur non activé ou plusieurs secteurs non activés sont respectivement agencés sur un bord du polygone.

16. Procédé selon la revendication 15, dans lequel les secteurs sont positionnés de telle sorte que, indépendamment de la question de savoir quel secteur est activé, respectivement deux secteurs sont toujours voisins en celui de leurs bords qui est identique.

17. Procédé selon l'une des revendications précédentes, dans lequel les secteurs sont positionnés et leur taille est choisie de telle sorte que tous les secteurs sont représentés sur l'interface utilisateur.

18. Procédé selon l'une des revendications précédentes, dans lequel les secteurs sont positionnés et leur taille est choisie de telle sorte qu'aucun secteur ne recouvre une partie d'un autre secteur.

19. Installation de traitement de données comportant des moyens d'affichage pour afficher une interface utilisateur sur laquelle peuvent être représentés, dans plusieurs secteurs, respectivement des objets d'image d'interface utilisateur à l'appel desquels est associée l'exécution de certaines fonctions de l'installation de traitement de données,
dans laquelle les secteurs se partagent une partie (10) de l'interface utilisateur,
dans laquelle les secteurs de l'installation de traitement de données sont représentés en différente grandeur sur l'interface utilisateur,
laquelle est aménagée de telle sorte qu'un secteur, s'il est activé, est représenté à une position préférentielle de l'interface utilisateur, tandis que les autres secteurs sont groupés autour du secteur activé,
**caractérisée en ce que**, si l'un des objets d'image d'interface utilisateur est tiré dans un autre secteur et si on l'y laisse tomber, l'objet d'image d'interface utilisateur est représenté au bord de ce secteur qui est voisin du secteur d'où on a tiré l'objet d'image d'interface utilisateur.

20. Produit de programme pour une installation de traitement de données, lequel contient des éléments de code logiciel permettant d'exécuter un procédé selon au moins l'une des revendications 1 à 18 sur une installation de traitement de données.
